# EUROPÄISCHE PATENTSCHRIFT

(11) **EP 3 106 339 B1**
(45) Veröffentlichungstag und Bekanntmachung des Hinweises auf die Patenterteilung: **07.08.2019**
(21) Anmeldenummer: 16174773.8
(22) Anmeldetag: 16.06.2016
(51) Int. Cl.: B60R 19/48, B60K 11/08, B62D 25/08

(54) **VERSCHLUSSVORRICHTUNG ZUM VERSCHLIESSEN EINES FUNTIONSWESENTLICHEN BAUTEILS EINES FAHRZEUGS**
CLOSURE DEVICE FOR CLOSING A VITAL FUNCTIONAL COMPONENT OF A VEHICLE
DISPOSITIF DE FERMETURE DESTINE A FERMER UN COMPOSANT FONCTIONNEL ESSENTIEL D'UN VEHICULE AUTOMOBILE

(30) Priorität: 17.06.2015 DE 102015109702
(43) Veröffentlichungstag der Anmeldung: 21.12.2016
(73) Patentinhaber: HBPO GmbH, 59552 Lippstadt (DE)
(72) Erfinder: Schöning, Ralf, 33442 Herzebrock-Clarholz (DE); Grünschneder, Matthias, 59556 Lippstadt (DE); Breisacher, Michael, 71083 Herrenberg (DE)
(74) Vertreter: Vogel, Andreas

(56) Entgegenhaltungen:
- EP-A2- 2 301 825
- DE-A1-102011 119 542
- US-A1- 2012 019 025

## Beschreibung

Die Erfindung betrifft eine Verschlussvorrichtung zum Verschließen eines funktionswesentlichen Bauteils eines Fahrzeuges. Ferner betrifft die Erfindung ein entsprechendes Frontendmodul eines Fahrzeuges und ein Verfahren zur Montage einer Verschlussvorrichtung.

Aus dem Stand der Technik sind herkömmliche Verschlussvorrichtungen bekannt, die dazu dienen, einen Lufteinlass zu einem funktionswesentlichen Bauteil, wie einem Kühler eines Fahrzeuges, zu regulieren. Solche Verschlussvorrichtungen sind beispielsweise als Luftklappensysteme ausgeführt und in einem Frontendmodul des Fahrzeuges zwischen dem Kühler und einer Lufteinlassöffnung angeordnet. Weiter weist die Verschlussvorrichtung wenigstens ein Verschlusselement, zum Beispiel eine Luftklappe, auf, welche zur Regulation den Lufteinlass verändern kann. Durch diese Regulation können die aerodynamischen Eigenschaften des Fahrzeuges verbessert und eine schnelle Erreichung der Betriebstemperatur eines Motors erzielt werden. Die Verschlussvorrichtung ist üblicherweise in einem Frontendmodul des Fahrzeuges angeordnet. Neben der Verschlussvorrichtung nimmt das Frontendmodul oft noch weitere Funktionsbauteile des Fahrzeugs auf, wie zum Beispiel einen Stoßfänger, einen oder mehrere Scheinwerfer sowie unterschiedliche Sensoren und dergleichen.

Bekannte Verschlussvorrichtungen weisen jedoch den Nachteil auf, dass sie in ihrer Funktion auf das Regulieren des Lufteinlasses beschränkt sind. Herkömmliche Frontendmodule haben den Nachteil, dass sie komplex und aufwendig konstruiert sind und für die aufzunehmenden Funktionsbauteile viele verschiedene Befestigungsmittel sowie viel Bauraum benötigt werden. Die Montage sowohl der Verschlussvorrichtung als auch des Frontendmoduls an das Fahrzeug ist dabei häufig kompliziert und aufwendig. Weiter wird für die Anordnung der Verschlussvorrichtung gemeinsam mit den Befestigungsmitteln des Frontendmoduls viel Bauraum und ein hoher Materialeinsatz benötigt, sodass insbesondere auch das Gewicht des Fahrzeuges und die Kosten für die Herstellung und Montage erhöht werden. Ein zusätzlicher Montage- und Kostenaufwand entsteht auch durch den Einbau von Deformationselementen zur Absorption von Aufprallenergie bei Auffahrunfällen oder dergleichen, welche ebenfalls weiteren Bauraum erfordern. DE102013218564 A1 offenbart eine Verschlussvorrichtung gemäß dem Oberbegriff des Patentanspruchs 1.

Daher ist es Aufgabe der vorliegenden Erfindung, die genannten Nachteile zumindest teilweise zu überwinden. Insbesondere ist es Aufgabe der Erfindung, eine Verschlussvorrichtung zum Verschließen eines funktionswesentlichen Bauteils eines Fahrzeuges, insbesondere eines Kühlers des Fahrzeuges, bereitzustellen, welche eine verbesserte und erweiterte Funktionalität aufweist und den notwendigen Bauraum sowie die Kosten bei der Montage reduziert.

Die voranstehende Aufgabe wird gelöst durch eine Verschlussvorrichtung mit den Merkmalen des Anspruchs 1, ein Frontendmodul mit den Merkmalen des Anspruchs 12 sowie durch ein Verfahren mit den Merkmalen des Anspruchs 14. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Verschlussvorrichtung beschrieben sind, selbstverständlich auch im Zusammenhang mit dem erfindungsgemäßen Frontendmodul sowie dem erfindungsgemäßen Verfahren, und jeweils umgekehrt, sodass bezüglich der Offenbarung zu den einzelnen Erfindungsaspekten stets wechselseitig Bezug genommen wird bzw. werden kann.

Die Aufgabe wird insbesondere gelöst durch eine Verschlussvorrichtung zum Verschließen eines funktionswesentlichen Bauteils eines Fahrzeuges, insbesondere eines Kühlers des Fahrzeuges, mit mindestens einem Verschlusselement zum Regulieren eines Lufteinlasses zum funktionswesentlichen Bauteil, und einem Trägerelement zur Aufnahme des mindestens einen Verschlusselementes. Hierbei ist vorgesehen, dass die Verschlussvorrichtung zumindest ein Deformationselement zur Absorption von Aufprallenergie an dem Fahrzeug, insbesondere der Fahrzeugvorderseite, aufweist. Unter Aufprallenergie wird hierbei insbesondere auch jeder Beschädigungen am Fahrzeug hervorrufende Effekt bezeichnet, welcher bei einer Krafteinwirkung auf den vorderen Bereich des Fahrzeuges durch beispielsweise einen Auffahrunfall oder einer frontalen Kollision des Fahrzeuges mit einem Hindernis oder dergleichen auftritt. Der Erfindungsgedanke liegt insbesondere darin, dass die Verschlussvorrichtung derart ausgebildet ist, dass die Verschlussvorrichtung neben dem Verschließen des funktionswesentlichen Bauteils, das heißt insbesondere der Regulierung des Lufteinlasses zu dem funktionswesentlichen Bauteil, noch weitere Funktionen aufweist. Insbesondere zur Durchführung ihrer Primärfunktion, das heißt der Regulierung des Lufteinlasses, kann die Verschlussvorrichtung das mindestens eine Verschlusselement aufweisen, welches beispielsweise in Form einer Lamelle und/oder eines Rollos und/oder dergleichen ausgeführt ist. Wenn das Verschlusselement beispielsweise als Lamelle ausgeführt ist, wird es durch eine Bewegung, wie zum Beispiel eine Drehung um die Längsachse, derart ausgerichtet, dass es durch seine flächige Erstreckung die Lufteinlassöffnung zumindest teilweise verschließt und umgekehrt in der Offenstellung die Lufteinlassöffnung zumindest teilweise freigibt. Diese Primärfunktion der Verschlussvorrichtung ermöglicht dabei zum Beispiel eine Verbesserung der aerodynamischen Eigenschaften des Fahrzeugs. Das Fahrzeug kann beispielsweise ein Kraftfahrzeug und/oder ein Personenkraftfahrzeug und/oder ein Lastkraftfahrzeug und/oder dergleichen sein.

Als eine weitere Funktion, das heißt Sekundärfunktion, kann die Verschlussvorrichtung zumindest ein Deformationselement zur Absorption von Aufprallenergie an dem Fahrzeug aufweisen. Bei diesem Deformationselement handelt es sich insbesondere um am Trägerelement angeformte Crashboxen, welche insbesondere ein Deformationsprofil aufweisen. Das mindestens eine Deformationselement ist beispielsweise als einteiliges Spritzgussteil ausgebildet und/oder bildet ein gemeinsames, monolithisches und somit einteiliges Bauteil, insbesondere Spritzgussteil, mit dem Trägerelement. Das zumindest eine Deformationselement ist dabei insbesondere derart ausgeführt, dass es bei einem Aufprall Verformungsarbeit aufnehmen kann, und damit als Energieabsorber zum Beispiel für den Fußgängerschutz ausgeführt ist. Hierzu kann das Deformationselement vorzugsweise ein Hohlkammerprofil aufweisen, welches bevorzugt durch eine seitliche (ggf. gasdichte) Wandung umschlossen ist. Die Wandung des Deformationselements kann bevorzugt trichterförmig ausgestaltet sein und/oder eine Welligkeit aufweisen. Dabei ist das Deformationselement besonders bevorzugt derart am Fahrzeug angeordnet, dass es bei einem (im Wesentlichen frontalen) Aufprall die Aufprallenergie primär, das heißt im Wesentlichen noch vor dem funktionswesentlichen Bauteil, absorbiert. Das Deformationselement weist dabei insbesondere eine deformierbare Befestigungsgeometrie auf, sodass es für eine Deformation bei einem Aufprall ausgelegt ist. Der Hohlraum des Deformationselements ist vorzugsweise in einer Richtung quer zum Fahrzeug (Fahrzeugquerachse), insbesondere vollständig, von der Wandung des Deformationselements umschlossen und/oder in Richtung der Fahrzeugober- und/oder - unterseite (Fahrzeughochachse) geöffnet. Das Deformationselement ist vorzugsweise derart in Längsrichtung ausgerichtet, dass es zum Beispiel in Längsrichtung des Fahrzeuges die größte Erstreckung (Länge) aufweist und/oder bei einem Aufprall deformiert beziehungsweise zusammengedrückt wird und hierdurch den Großteil der Aufprallenergie absorbieren kann. Hierdurch wird insbesondere der Vorteil erzielt, dass durch das Deformationselement ein Stoßfängerquerträger, welcher durch einen Aufprall in Richtung des Motorraums bewegt wird, aufgefangen werden kann, ohne dass das funktionswesentliche Bauteil und/oder weitere Funktionsbauteile des Fahrzeuges beschädigt werden.

Vorzugsweise ist das Deformationselement dazu ausgeführt, sich (insbesondere ausschließlich und/oder überwiegend) plastisch (dauerhaft) zu deformieren (beispielsweise verformen). Überwiegend bezieht sich darauf, dass ein Ausmaß einer elastischen Verformung sehr viel geringer ist als das Ausmaß einer plastischen Verformung des Deformationselements bei der Absorption der Aufprallenergie. Es ist insbesondere denkbar, dass das zumindest eine Deformationselement zur Absorption von Aufprallenergie an dem Fahrzeug dazu ausgeführt ist, dass bei der Absorption, bspw. bei einem Aufprall, das Deformationselement deformiert, insbesondere plastisch (und damit insbesondere dauerhaft bzw. nicht elastisch) deformiert, wird. Um eine plastische Deformation (bspw. Verformung) des Deformationselements bei einer Krafteinwirkung zu ermöglichen, ist das Deformationselement bspw. starr und/oder mit hoher Festigkeit und/oder inelastisch und/oder federlos ausgeführt. Bevorzugt erfolgt bei der Absorption der Aufprallenergie eine irreversible Beschädigung des Deformationselements. Bevorzugt wird diese Beschädigung und/oder die Deformation des Deformationselements durch eine Krafteinwirkung verursacht, welche von der Fahrzeugvorderseite ausgeht. Mit anderen Worten erfolgt die Deformation des Deformationselements insbesondere durch eine Krafteinwirkung von einer Seite des Deformationselements, welche einer kühlerzugewandten Seite gegenüberliegt und/oder welche kühlerabgewandt ist. Insbesondere dient das Deformationselement ausschließlich zur Absorption und damit vorzugsweise nicht für eine weitere Funktion, wie einer Stützung oder Verstärkung des Trägerelements und/oder der Verschlussvorrichtung.

Bevorzugt ist das Deformationselement unbeweglich am oder im Fahrzeug und/oder an oder in der Verschlussvorrichtung angeordnet. Vorzugsweise ist das Deformationselement frei von beweglichen Teilen ausgeführt. Insbesondere ist das Deformationselement einteilig und/oder monolithisch ausgeführt.

Insbesondere ist das Deformationselement als ein vom Stoßfänger und/oder Stoßfänger(quer)träger separat ausgebildetes Teil ausgeführt.

Vorzugsweise erfolgt die Deformation des Deformationselements zur Absorption derart, dass das Deformationselement einteilig und/oder rissfrei bleibt, und somit beispielsweise ein Bruch des Deformationselementes vermieden wird. Damit kann eine Beschädigung durch sich lösende Teile vermieden werden. Insbesondere ist das Deformationselement frei von einer Sollbruchstelle.

Bevorzugt ist die Aufprallenergie abhängig von oder resultiert aus einer Einwirkung auf die Vorderseite des Fahrzeuges, insbesondere von außerhalb des Fahrzeuges, vorzugsweise einem Aufprall.

Bevorzugt kann im Rahmen der Erfindung vorgesehen sein, dass das Trägerelement zum Befestigen eines zumindest teilweise außen am Fahrzeug und/oder außerhalb des Fahrzeuges, insbesondere Fahrzeug-Inneren, liegenden Verkleidungselementes ausgeführt ist, wobei insbesondere das Verkleidungselement ein Stoßfängerüberzug ist. Hierdurch ergibt sich noch eine weitere Funktion, insbesondere Sekundärfunktion, neben der bereits beschriebenen Primärfunktion (Verschließen des funktionswesentlichen Bauteils) und der Sekundärfunktion (Nutzung von Deformationselementen). Gemäß dieser weiteren Funktion kann die Verschlussvorrichtung als eine Befestigungsbank für das Verkleidungselement dienen, um das Verkleidungselement am Frontendmodul des Fahrzeuges zu montieren. Das Verkleidungselement kann dabei einen Übergang zur Motorhaube aufweisen, der aus optischen und aerodynamischen Gründen möglichst lückenlos ausgeführt werden soll.

Weiter kann die Verschlussvorrichtung vorzugsweise auch ein Justiermittel aufweisen, um die Position des Verkleidungselements zumindest in eine Richtung zu justieren. Dabei lässt sich durch das Justiermittel die Position des Verkleidungselements in der Fahrzeughochachse beziehungsweise Fahrzeughochrichtung einstellen, um eine möglichst exakte und schmale Fuge zwischen dem Stoßfängerüberzug und der Motorhaube zu erhalten. Die erfindungsgemäße Verschlussvorrichtung kann dabei auch eine Toleranzausgleichsfunktionalität aufweisen, um den Übergang zwischen dem Frontendmodul, insbesondere dem Stoßfängerüberzug, und der Motorhaube optimal und mit einfachen Mitteln möglichst fließend und lückenlos zu gestalten. Der Stoßfängerüberzug ist insbesondere ein sichtbarer Bestandteil der Fahrzeugfront, und spielt in modernen Fahrzeugen eine zunehmend wichtige Rolle. Dabei dient er als Designelement und weist weiterhin viele technische Eigenschaften auf, zum Beispiel als Element, welches beim Fahren einem Luftwiderstand ausgesetzt ist und daher entsprechend seiner Form die Aerodynamik des Fahrzeuges beeinflusst. Vorteilhafterweise kann dabei die erfindungsgemäße Verschlussvorrichtung als Befestigungsbank für den Stoßfängerüberzug dienen und eine optimale Positionierung des Stoßfängerüberzugs bezüglich der Motorhaube ermöglichen. Zur optimalen Positionierung, zum Beispiel in der Höhe, dient beispielsweise das Justiermittel der Verschlussvorrichtung.

Bevorzugt kann im Rahmen der Erfindung vorgesehen sein, dass das Trägerelement zum Befestigen zumindest eines Funktionsbauteils des Fahrzeuges ausgeführt ist. Die Befestigung des Funktionsbauteils des Fahrzeugs entspricht dabei einer weiteren Funktion (beziehungsweise Sekundärfunktion), wobei die Funktionsbauteile beispielsweise Anbauteile und/oder Halter, wie einen Rohluftkanal (Frischluftkanal) für die Rohluftansaugung (Frischluftansaugung) und/oder Halterungen beziehungsweise Abstützungen für den Abstands-Regel-Sensor des Fahrzeuges, umfassen. Weiter kann auch das zumindest eine Deformationselement und/oder weitere separate Deformationselemente gegebenenfalls als Funktionsbauteil aufgefasst werden. Insbesondere neben dem eigentlichen Montageträger des Frontendmoduls kann somit auch die Verschlussvorrichtung zum Befestigen von Funktionsbauteilen des Fahrzeugs dienen. Dies erhöht die Gestaltungsmöglichkeiten des Frontendmoduls und hilft zudem, Bauraum optimal auszunutzen und die Montage des Frontendmoduls zu erleichtern.

Es ist weiter denkbar, dass das Funktionsbauteil zumindest einen der folgenden Bauteile umfasst: einen Sensor, eine Sensorik (insbesondere mit mehreren Sensoren), eine Kamera, eine Luftführung, einen Scheinwerfer, einen Stoßfänger und/oder dergleichen. Hierzu weist das Trägerelement beispielsweise Befestigungsmittel für die Funktionsbauteile auf, um zum Beispiel die Luftführung und/oder den Sensor mit dem Trägerelement zu verbinden. Weiter kann es auch vorgesehen sein, dass zumindest einige der Funktionsbauteile mit dem Trägerelement ein monolithisches Bauteil bilden und/oder am Trägerelement angeformt sind. Das Funktionsbauteil kann weiter beispielsweise lösbar und/oder unlösbar mit dem Trägerelement verbunden sein. An einer Vorderseite der Verschlussvorrichtung, das heißt in Richtung der Fahrzeugvorderseite, kann beispielsweise als Funktionsbauteil eine vordere Luftführung eingesteckt werden, welche den Luftstrom von der Lufteinlassöffnung, das heißt zum Beispiel den Kühlergrill, zur Verschlussvorrichtung kanalisiert. Auf der Rückseite der Verschlussvorrichtung kann beispielsweise als Funktionsbauteil eine weitere (hintere) Luftführung befestigt werden, welche den Luftstrom auf das funktionswesentliche Bauteil, insbesondere eine Kühlernetzfläche des Kühlers, kanalisiert. An der Unterseite der Verschlussvorrichtung kann beispielsweise eine Vorpositionierung für das Biegeträgersystem vorgesehen sein. Aufgrund dieser multifunktionalen Ausgestaltung der Verschlussvorrichtung kann Bauraum eingespart und die Kosten für die Montage reduziert werden.

Optional kann vorgesehen sein, dass das Deformationselement als Energieabsorber zum Fußgängerschutz bei einem Aufprall des Fahrzeuges dient. Alternativ oder zusätzlich dient das Deformationselement insbesondere auch als Schutz der funktionswesentlichen Bauteile des Fahrzeuges, insbesondere des Kühlers, wobei es bei einem Aufprall zunächst die Aufprallenergie absorbiert, bevor es zu einer Beschädigung des funktionswesentlichen Bauteils kommt. Dabei ist es insbesondere vorgesehen, dass das Deformationselement ausschließlich eine primäre Funktion als Energieabsorber aufweist und/oder daneben lediglich als weitere sekundäre Funktion zum Beispiel als Befestigungsmittel und/oder Fixierhilfsmittel dient. Somit können sonstige Elemente, Wandungen oder Befestigungsmittel der Verschlussvorrichtung nicht als Deformationselement aufgefasst werden, da diese nicht primär zur Energieabsorbierung und/oder zum Fußgängerschutz und/oder zur Aufnahme von Aufprallenergie dienen und keine daran primär angepasste Ausgestaltung aufweisen. Durch die Deformationselemente wird die Funktionalität der Verschlussvorrichtung noch weiter verbessert.

Gemäß einem weiteren Vorteil kann vorgesehen sein, dass zumindest zwei Deformationselemente, das heißt insbesondere ein erstes rechtsseitiges und zweites linksseitiges Deformationselement, am Trägerelement ausgebildet sind, wobei insbesondere die Deformationselemente auf gegenüberliegenden Seiten des Trägerelements angeordnet sind. Dabei ist die Verschlussvorrichtung insbesondere derart am Fahrzeug und/oder im Frontendmodul angeordnet, dass die Deformationselemente auf gegenüberliegenden Seiten in Fahrzeugquerrichtung angeordnet sind. Hierdurch ergibt sich eine optimale Schutzwirkung durch die Deformationselemente.

Es ist ferner denkbar, dass ein drittes Deformationselement, insbesondere in Fahrzeugquerrichtung mittig, am Trägerelement vorgesehen ist. Das dritte Deformationselement ist somit insbesondere in Fahrzeugquerrichtung mittig, das heißt vorzugsweise auch gegenüber dem mittigen Bereich des Kühlers und/oder Kühlergrills des Fahrzeuges, angeordnet. Die Anordnung des dritten Deformationselement erfolgt insbesondere derart, dass das dritte Deformationselement im Wesentlichen den gleichen Abstand zum ersten und zum zweiten Deformationselement aufweist und bevorzugt zwischen dem ersten und dem zweiten Deformationselement, besonders bevorzugt jedoch auf einer unterschiedlichen Höhe (zum Beispiel oberhalb), angeordnet ist. Hierdurch wird der Schutz durch die Deformationselemente weiter verbessert.

Gemäß einem weiteren Vorteil kann vorgesehen sein, dass das Deformationselement mindestens eine Hohlkammer, insbesondere mehr als zwei oder drei Hohlkammern, aufweist. Die Hohlkammern als Elemente des Hohlkammerprofils des Deformationselements können dabei beispielsweise durch Wandungen des Deformationselements gebildet werden. Die zumindest eine Hohlkammer ist beispielsweise derart ausgerichtet und/oder ausgebildet, dass sie die größte Erstreckung im Wesentlichen in Fahrzeuglängsrichtung aufweist. Damit kann ein verbesserter Schutz des funktionswesentlichen Bauteils bewirkt werden.

Vorteilhafterweise kann das Trägerelement zum Befestigen eines Aktuators ausgelegt sein, um das zumindest eine Verschlusselement anzutreiben. Somit kann die Verschlussvorrichtung eine Baugruppe bilden, welche autonom in Betrieb genommen werden kann, das heißt zum Beispiel unabhängig von jeglichen externen Vorrichtungen, wie von externen Antrieben. Weiter kann die Verschlussvorrichtung zum Betrieb der Verschlusselemente zumindest eine entsprechende Steuerung im oder am Trägerelement aufweisen. Die Verschlusselemente beziehungsweise das Verschlusselement wird hierzu beispielsweise durch die Steuerung und/oder durch den Aktuator derart angesteuert und/oder bewegt, dass in einer Schließstellung das Verschlusselement den Querschnitt (Strömungsquerschnitt) einer Lufteinlassöffnung zum funktionswesentlichen Bauteil reduziert und hierdurch den Lufteinlass zumindest teilweise verhindert und in der Offenstellung der Lufteinlass zum funktionswesentlichen Bauteil zumindest teilweise freigegeben und der Querschnitt somit erhöht wird. Die Lufteinlassöffnung ist beispielsweise der Bereich der Verschlussvorrichtung zwischen den als Lamellen ausgebildeten Verschlusselementen, durch welche die Luftströmung erfolgt, oder auch ggf. Kühlergrillöffnungen oder dergleichen.

Es ist ferner denkbar, dass das Verschlusselement ein Rolloelement ist. Durch die erfindungsgemäße Verschlussvorrichtung kann der Lufteinlass zum funktionswesentlichen Bauteil, beispielsweise zum Kühler des Fahrzeugs, grundsätzlich variabel gestaltet werden.

Dabei kann das Verschlusselement in Form eines Rolloelements vorteilhaft sein, um eine Bauraumersparnis, insbesondere in einer Fahrzeuglängsrichtung, zu erzielen. Das Verschlusselement besitzt dabei insbesondere den Vorteil, dass es aufwickelbar und/oder aufrollbar ist und vorzugsweise besonders schmal ausgestaltet ist und somit nur wenig Bauraum benötigt.

Es ist außerdem denkbar, dass das Verschlusselement eine Lüftungsklappe ist. Die Lüftungsklappe kann dabei sowohl in der Fahrzeughochachse als auch in einer Fahrzeugquerachse ausgerichtet sein. Das Verschlusselement in Form der Lüftungsklappe kann vorteilhaft sein, um den Lufteinlass zum funktionswesentlichen Bauteil des Fahrzeugs besonders schnell zu regulieren. Dies wird beispielsweise durch eine drehbare Lagerung um die Längsachse der Lüftungsklappe bewirkt. Hierzu sind beispielsweise Lagerelemente, wie Lagerzapfen, am Verschlusselement beispielsweise gegenüberliegend in Längsrichtung vorgesehen.

Ein weiterer Vorteil kann im Rahmen der Erfindung erzielt werden, wenn eine Vielzahl an Verschlusselementen vorgesehen ist, um eine gewünschte Verblendung des funktionswesentlichen Bauteils einzustellen. Im Falle des Verschlusselements in Form eines Rolloelements können mehrere Rolloelemente ein Rollo bilden, welches auf eine einfache Weise auf eine Stange aufgewickelt werden kann und umgekehrt, um den Lufteinlass zum Kühler entsprechend zu erlauben oder zu unterbinden. Dabei kann das Rollo den Lufteinlass beispielsweise auch nur teilweise freigeben, indem es nur soweit hochgezogen wird, dass eine bestimmte Menge frischer Luft zum Kühler eingeleitet wird. Hierdurch kann eine optimale Regulation des Lufteinlasss erfolgen. Mehrere Verschlusselemente, insbesondere auch Belüftungsklappen, vereinfachen dabei die Regulation und die Bestimmung der Luftmenge, welche eintreten kann.

Vorteilhafterweise kann vorgesehen sein, dass die Verschlussvorrichtung als Frontmoduladapter ausgebildet ist. Der Frontmoduladapter weist dabei insbesondere als Hauptaufgabe die Befestigung und das Tragen des Stoßfängerüberzugs auf. Es wird beispielsweise ein Grundträger des Stoßfängers an dem Frontmoduladapter befestigt. Weiter kann sich in Fahrzeuglängsrichtung das Schwert der Kühlerverkleidung, insbesondere der Kühlergrill, insbesondere als Teilbereich des Stoßfängers in dem Frontmoduladapter abstützen. Weiter ist der Frontmoduladapter vorzugsweise an dem Montageträger befestigt, um eine sichere Anordnung im Frontendmodul zu ermöglichen.

Ein weiterer Vorteil kann im Rahmen der Erfindung erzielt werden, wenn das Trägerelement und das Deformationselement ein gemeinsames monolithisches, das heißt insbesondere einteiliges / einstückiges, Bauteil bilden, und dass insbesondere das Trägerelement und das Deformationselement materialeinheitlich, bevorzugt als ein Spritzgussteil ausgebildet sind. Sowohl das Trägerelement als auch das Deformationselement können dabei aus einem Kunststoff, insbesondere einem wärmebeständigen und/oder gasdichten Kunststoff, ausgebildet sein. Hierdurch wird die Herstellung und Montage sowohl der Verschlussvorrichtung als auch des Deformationselements weiter vereinfacht und/oder Kosten reduziert. Es können dabei zum Beispiel auch mindestens zwei und/oder mindestens drei und/oder mindestens vier Deformationselemente durch das Trägerelement gebildet werden.

Ein weiterer Vorteil kann im Rahmen der Erfindung erzielt werden, wenn das Trägerelement, insbesondere das Deformationselement, ein Fixierhilfsmittel aufweist, um die Verschlussvorrichtung am Fahrzeug zu fixieren. Das Deformationselement und/oder das Fixierhilfsmittel dienen dabei insbesondere zur Befestigung des Trägerelements beziehungsweise der Verschlussvorrichtung an einem Montageträger, insbesondere eines Frontendmoduls. Das Fixierhilfsmittel kann dabei beispielsweise als eine geometrische Anpassung einer Wandung des Deformationselements und/oder als eine Ausnehmung und/oder Öffnung und/oder Führung des Deformationselements ausgebildet sein. Hierdurch ist eine einfache und schnelle Montage der Verschlussvorrichtung möglich.

Ferner kann im Rahmen der Erfindung vorgesehen sein, dass das Fixierhilfsmittel in Form einer Führung ausgebildet ist, welche insbesondere mit einem Fixiermittel zusammenwirkt, wobei bevorzugt das Fixiermittel in Form einer Schraube ausgebildet ist. Es können weiter auch zumindest zwei Fixierhilfsmittel vorgesehen sein, wobei beispielsweise ein erstes Fixierhilfsmittel an einer Vorderseite und ein zweites Fixierhilfsmittel an einer Rückseite (in Richtung Fahrzeugrückseite beziehungsweise Fahrzeugheck) des Deformationselements vorgesehen sind. Die Fixierhilfsmittel können dabei auch unterschiedlich ausgebildet sein und/oder unterschiedliche Funktionen aufweisen. So kann beispielsweise das erste Fixierhilfsmittel als eine Führung (zur Montage) ausgebildet und das zweite Fixierhilfsmittel als eine Aufnahme für das Fixiermittel, insbesondere einer Schraube, (zur Befestigung) ausgebildet sein. Das Fixiermittel dient dabei insbesondere zur direkten Befestigung an einem Montageträger des Fahrzeuges. Die Führung vereinfacht dabei vorzugsweise die Montage der Verschlussvorrichtung an dem Montageträger.

Ebenfalls Gegenstand der Erfindung ist ein Frontendmodul eines Fahrzeuges, mit einem Montageträger. Hierbei ist vorgesehen, dass das Frontendmodul zumindest eine, insbesondere zumindest zwei Verschlussvorrichtungen mit zumindest einem Deformationselement zur Absorption von Aufprallenergie an dem Fahrzeug aufweist. Damit bringt das erfindungsgemäße Frontendmodul die gleichen Vorteile mit sich, wie sie ausführlich mit Bezug auf eine erfindungsgemäße Verschlussvorrichtung beschrieben worden sind. Zudem kann das erfindungsgemäße Frontendmodul eine erfindungsgemäße Verschlussvorrichtung aufweisen. Die Deformationselemente können dabei insbesondere zur Befestigung der Verschlussvorrichtung an dem Montageträger dienen, wobei dies lediglich die sekundäre Funktion der Deformationselemente darstellt. Die primäre Funktion der Deformationselemente ist die Aufnahme von Aufprallenergie bei beispielsweise einem Unfall mit dem Fahrzeug. Da die Verschlussvorrichtung vorzugsweise im vorderen Bereich des Fahrzeugs angeordnet ist, werden hierunter insbesondere Energieeinwirkungen durch einen Aufprall im Frontbereich des Fahrzeuges verstanden. Der Montageträger dient dabei insbesondere auch zur Befestigung von einer Vielzahl von Funktionsbauteilen und/oder funktionswesentlichen Bauteilen des Fahrzeugs. Die Verschlussvorrichtung ist dabei insbesondere zwischen einem Kühlergrill und einem Kühler des Fahrzeuges angeordnet. Alternativ oder zusätzlich ist es möglich, dass zumindest zwei Verschlussvorrichtungen beispielsweise in Richtung der Fahrzeughochachse beziehungsweise Fahrzeughochrichtung übereinander angeordnet sind.

Vorteilhaft ist es darüber hinaus, wenn im Rahmen der Erfindung die Verschlussvorrichtung durch das Fixierhilfsmittel an dem Montageträger befestigt ist und/oder durch zumindest ein Deformationselement, das heißt insbesondere über eine Wandung oder im Bereich des Deformationselements, an dem Montageträger befestigt ist. Dabei ist das Fixierhilfsmittel beispielsweise als eine Aufnahme und/oder als eine Verbindungsstelle für ein Fixiermittel ausgebildet. Das Fixiermittel kann dabei beispielsweise eine Schraube und/oder ein Kleber und/oder ein Rastmittel sein. Hierdurch wird eine einfache und schnelle Montage des Frontendmoduls möglich.

Ebenfalls Gegenstand der Erfindung ist ein Verfahren zur Montage einer Verschlussvorrichtung, die zum Verschließen eines funktionswesentlichen Bauteils eines Fahrzeuges, insbesondere eines Kühlers ausgelegt ist, und mit mindestens einem Verschlusselement zum Regulieren eines Lufteinlasses zum funktionswesentlichen Bauteil, und einem Trägerelement zur Aufnahme des mindestens einen Verschlusselementes ausgeführt ist. Hierbei ist vorgesehen, dass die Verschlussvorrichtung zumindest ein Deformationselement zur Absorption von Aufprallenergie an dem Fahrzeug aufweist. Das Verfahren umfasst insbesondere die folgenden Schritte, welche vorzugsweise nacheinander durchgeführt werden sollen:
1) Anordnen der Verschlussvorrichtung am Fahrzeug und
2) Befestigen der Verschlussvorrichtung am Fahrzeug durch ein Fixiermittel mit, das heißt insbesondere unter Zuhilfenahme, einem Fixierhilfsmittel der Verschlussvorrichtung.

Damit bringt das erfindungsgemäße Verfahren die gleichen Vorteile mit sich, wie sie ausführlich mit Bezug auf eine erfindungsgemäße Verschlussvorrichtung und/oder ein erfindungsgemäßes Frontendmodul beschrieben worden sind. Zudem kann das erfindungsgemäße Verfahren zur Montage einer erfindungsgemäßen Verschlussvorrichtung und/oder eines erfindungsgemäßen Frontendmoduls dienen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig.1: eine schematische Ansicht auf Teile eines erfindungsgemäßen Frontendmoduls,
- Fig. 2: eine weitere schematische Ansicht auf Teile eines erfindungsgemäßen Frontendmoduls,
- Fig. 3: eine weitere schematische Ansicht auf Teile eines erfindungsgemäßen Frontendmoduls mit einem Stoßfängerüberzug,
- Fig. 4: eine schematische Rückansicht auf Teile eines erfindungsgemäßen Frontendmoduls,
- Fig. 5: eine schematische perspektivische Ansicht auf Teile eines erfindungsgemäßen Frontendmoduls,
- Fig. 6: eine schematische vergrößerte Darstellung eines Deformationselements,
- Fig. 7: eine schematische Darstellung eines Befestigungsmittels,
- Fig. 8: eine schematische vergrößerte Darstellung von Befestigungsmitteln,
- Fig. 9: eine vergrößerte schematische Darstellung von Teilen einer erfindungsgemäßen Verschlussvorrichtung,
- Fig. 10: eine vergrößerte schematische Darstellung von Teilen einer erfindungsgemäßen Verschlussvorrichtung,
- Fig. 11: eine schematische Draufsicht auf Teile einer erfindungsgemäßen Verschlussvorrichtung,
- Fig. 12: eine schematische Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

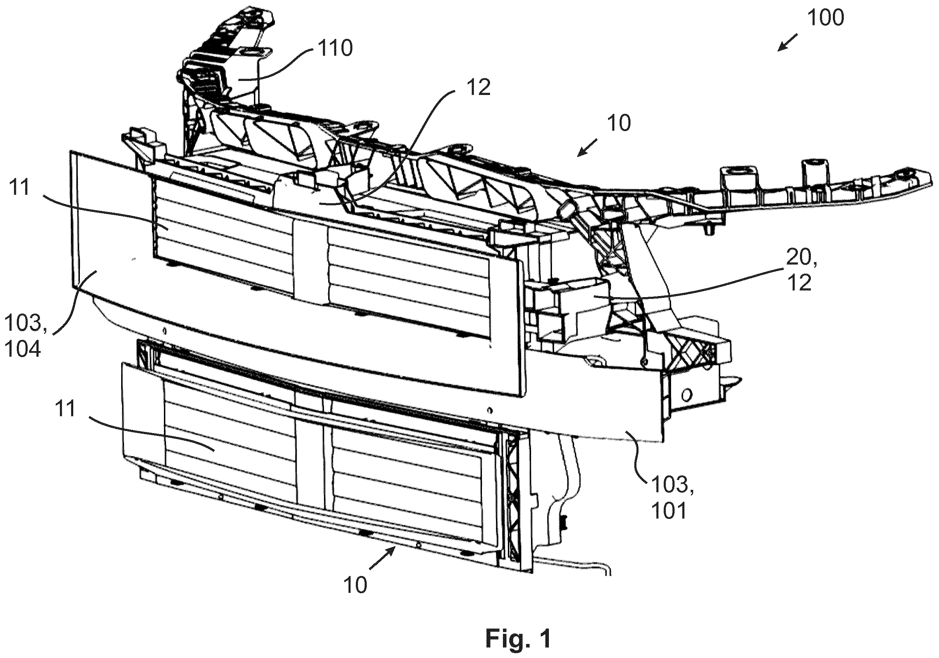

Fig. 1 zeigt schematisch in einer perspektivischen Ansicht Teile einer erfindungsgemäßen Verschlussvorrichtung 10 sowie Teile eines erfindungsgemäßen Frontendmoduls 100. Dabei ist ein Montageträger 110 erkennbar, welcher im vorderen Bereich eines Fahrzeuges anordenbar ist. Die erfindungsgemäße Verschlussvorrichtung 10 umfasst mindestens ein Verschlusselement 11 und ein Trägerelement 12. In Fig. 1 ist erkennbar, dass das erfindungsgemäße Frontendmodul 100 zwei erfindungsgemäße Verschlussvorrichtungen 10 aufweist, welche untereinander angeordnet sind. Weiter ist erkennbar, dass eine Schließstellung der Verschlussvorrichtung 10 dargestellt ist, wobei die Verschlusselemente 11 eine Lufteinlassöffnung für eine Luftströmung zum funktionswesentlichen Bauteil, insbesondere einem Kühler, verhindern. Das nicht dargestellte funktionswesentliche Bauteil, das heißt insbesondere der Kühler, ist dabei hinter der Verschlussvorrichtung 10 angeordnet. In einer Offenstellung lassen sich dabei die als Lamellen ausgebildeten Verschlusselemente 11 derart bewegen beziehungsweise drehen, dass die Lufteinlassöffnung freigegeben und somit der Lufteinlass durch insbesondere eine dargestellte Luftführung 104 möglich ist. Die dargestellte Luftführung 104 dient dabei als ein Funktionsbauteil 103, welches mit der Verschlussvorrichtung 10 verbunden ist. Die direkte Befestigung von Funktionsbauteilen 103 an der Verschlussvorrichtung 10 entspricht dabei einer weiteren Funktion der Verschlussvorrichtung 10. Erfindungsgemäß ist als eine weitere Funktion ein Deformationselement 20 am Trägerelement 12 vorgesehen, welches insbesondere durch das Trägerelement 12 gebildet wird. Optional kann auch ein Stoßfänger 101 als Funktionsbauteil 103 an dem Trägerelement 12 befestigt werden.

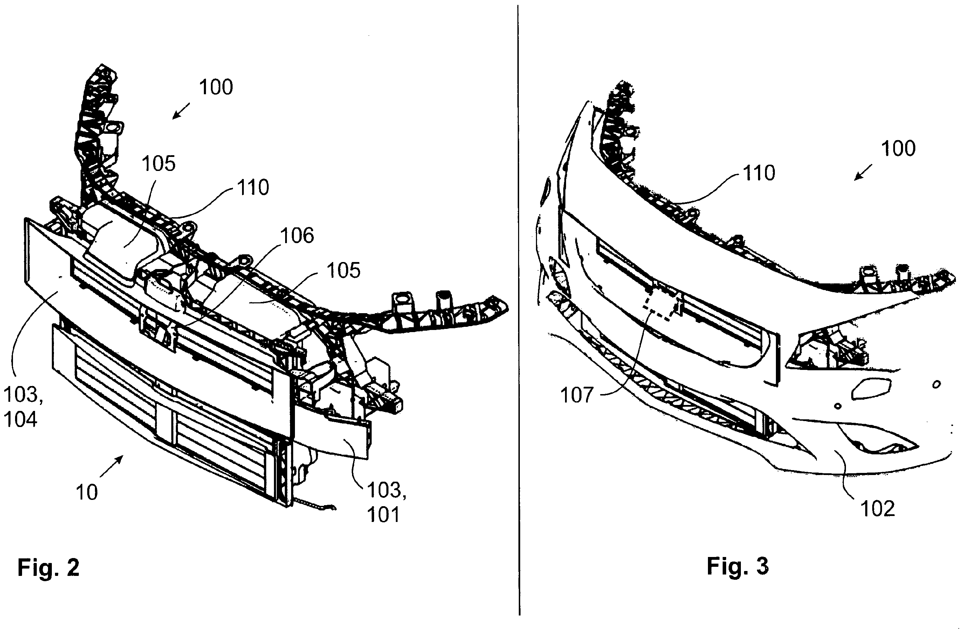

Die Fign. 2 und 3 zeigen jeweils eine perspektivische Ansicht auf Teile eines erfindungsgemäßen Frontendmoduls 100 mit einer erfindungsgemäßen Verschlussvorrichtung 10. Dabei ist in Fig. 3 zusätzlich ein Stoßfängerüberzug 102 dargestellt, welcher als Verkleidungselement 102 am Trägerelement 12 der erfindungsgemäßen Verschlussvorrichtung 10 befestigt ist. Zudem ist ein weiteres mit dem Trägerelement 12 verbundenes Funktionsbauteil 103 vorgesehen, welches als Sensorbaugruppe 107 ausgebildet ist. Diese Sensorbaugruppe 107 dient beispielsweise als Abstand-Regel-Sensor. In Fig. 2 ist zudem ein hinter dem Stoßfängerüberzug 102 angeordneter Frischluftkanal 105 zu sehen, welcher ebenfalls an dem Trägerelement 12 befestigt sein kann. Die Sensorbaugruppe 107 kann dabei beispielsweise an einem Sensorhalter 106 angeordnet sein, wobei der Sensorhalter 106 mit dem Trägerelement 12 verbunden ist.

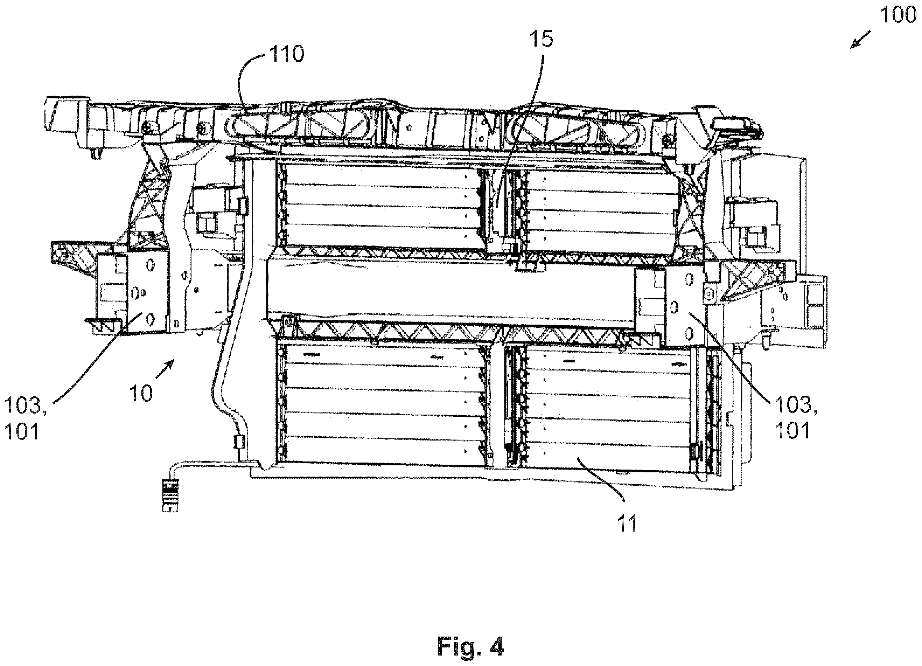

Fig. 4 zeigt eine Rückansicht auf Teile einer erfindungsgemäßen Verschlussvorrichtung 10 sowie auf mit einem Trägerelement 12 verbundene Funktionsbauteile 103. Dabei ist erkennbar, dass die erfindungsgemäße Verschlussvorrichtung 10, und insbesondere das Trägerelement 12, zur Aufnahme eines Aktuators 15 zum Betreiben, das heißt insbesondere zum Antrieb und/oder zum Bewegen, der Verschlusselemente 11, ausgebildet ist.

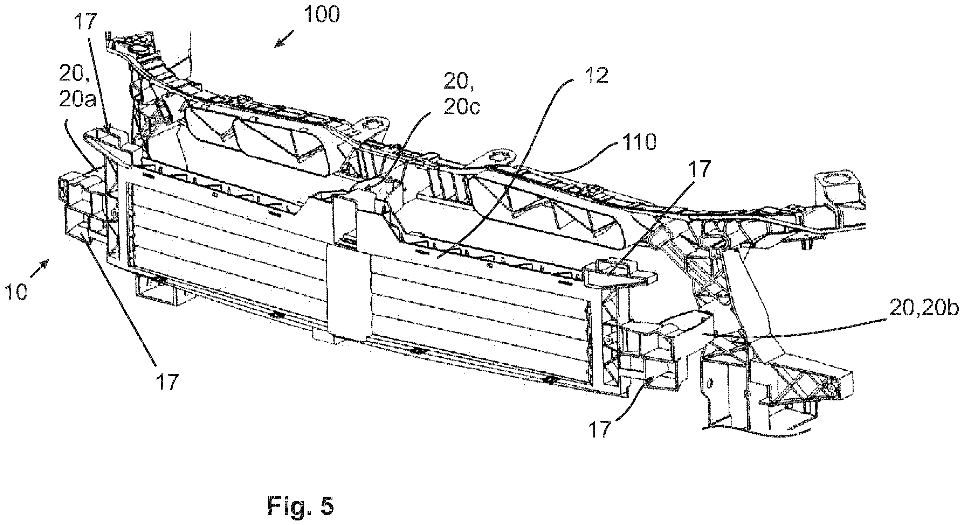

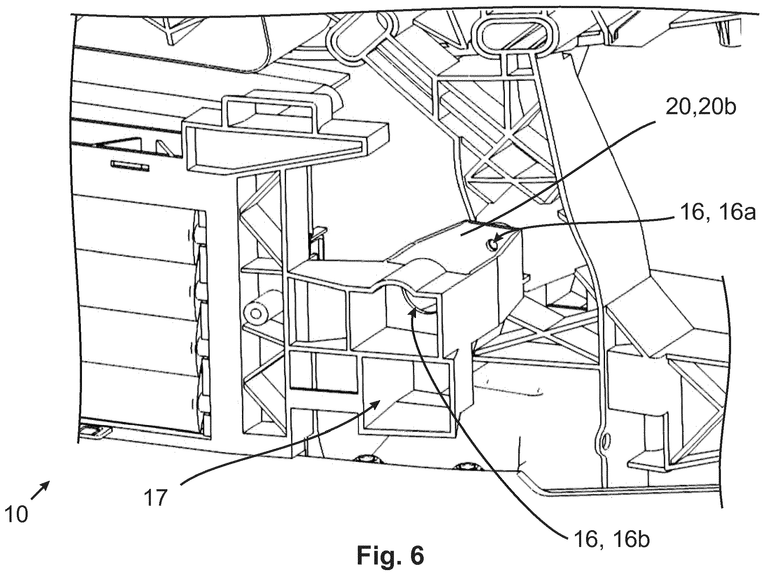

In Fig. 5 ist eine perspektivische Vorderansicht auf Teile eines erfindungsgemäßen Frontendmoduls 100 und einer erfindungsgemäßen Verschlussvorrichtung 10 gezeigt. Dabei ist im Seitenbereich eines Trägerelements 12 der Verschlussvorrichtung 10 zumindest eine Aufnahme 17, insbesondere mehrere Aufnahmen 17, vorgesehen, welche beispielsweise zur Aufnahme eines Grundträgers des Stoßfängers 101 dient. Die Aufnahmen 17 können dabei ein monolithisches Bauteil mit dem Trägerelement 12 bilden und somit materialeinheitlich zum Trägerelement 12 ausgebildet sein. Weiter sind weitere Aufnahmen 17 zur Aufnahme der Kühlerverkleidung und/oder zur Stoßfängerabstützung vorgesehen. Die Aufnahmen können dabei beispielsweise einen Hohlraum aufweisen, welcher insbesondere auch trichterförmig ausgestaltet sein kann. Daneben weist das Trägerelement 12 zumindest drei Deformationselemente 20 auf. Ein erstes Deformationselement 20a und ein zweites Deformationselement 20b sind dabei auf gegenüberliegenden Seiten des Trägerelements 12 in Fahrzeugquerrichtung angeordnet. Ein drittes Deformationselement 20c ist mittig am Trägerelement 12 und höher als das erste und zweite Deformationselement 20a, 20b angeordnet. Wie in Fig. 6 deutlich zu erkennen ist, weist (gegebenenfalls jedes der) Deformationselemente 20 ein Fixierhilfsmittel 16 auf, wobei ein erstes Fixierhilfsmittel 16a beispielsweise als Aufnahme für eine Schraube und ein zweites Fixierhilfsmittel 16b beispielsweise als Führung zur Montage ausgebildet sein kann. Die Deformationselemente 20 ermöglichen dabei als sekundäre Funktion die Befestigung der Verschlussvorrichtung 10 unmittelbar an einen Montageträger 110.

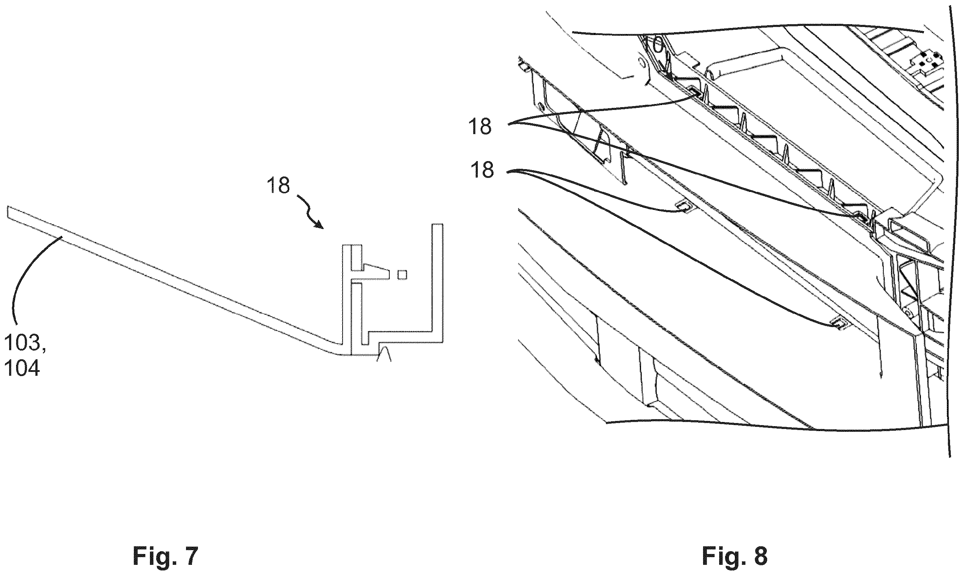

In den Fign. 7 und 8 ist eine mögliche Ausgestaltung der Befestigungsmittel 18 insbesondere als Clipse beziehungsweise Rastmittel dargestellt. Die Befestigungsmittel 18 können dabei, wie in Fig. 8 dargestellt ist, am Trägerelement 12 vorgesehen sein, und eine Befestigung eines Funktionsbauteils 103, insbesondere einer Luftführung 104, wie in Fig. 7 dargestellt ermöglichen.

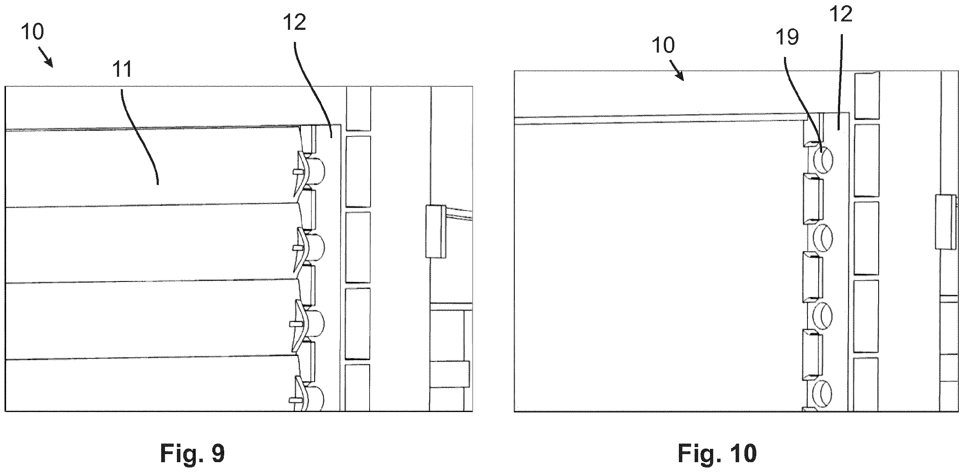

In den Fign. 9 und 10 ist die Anordnung und Lagerung der Verschlusselemente 11 der erfindungsgemäßen Verschlussvorrichtung 10 gezeigt. Dabei weist das Trägerelement 12, welches als Rahmen ausgebildet sein kann, vorzugsweise für jedes Verschlusselement 11 jeweils ein oder mehrere Lagerelemente 19 auf. Die Lagerelemente 19 können zum Beispiel als Aufnahme für Lagerzapfen der Verschlusselemente 11 ausgebildet sein.

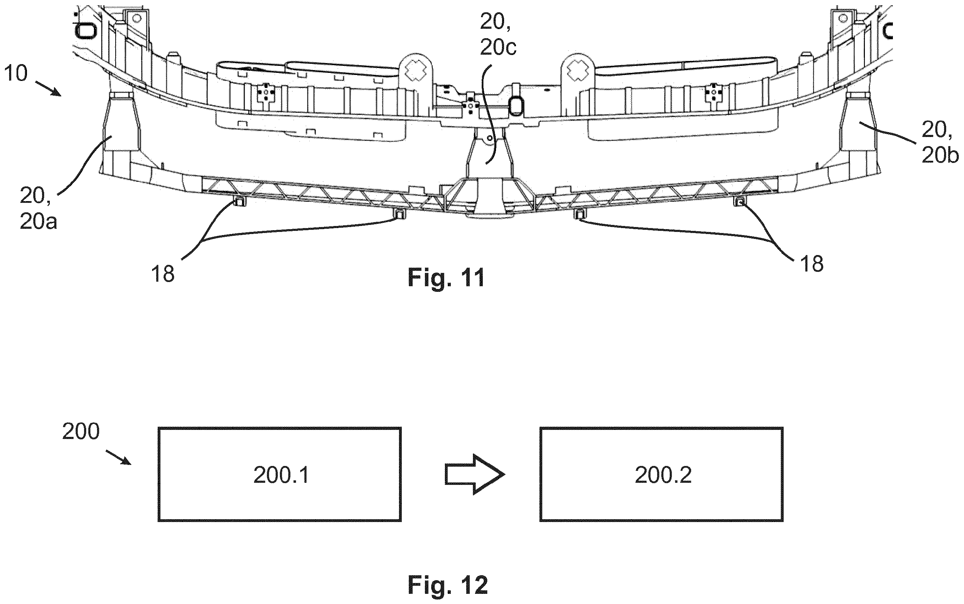

Fig. 11 zeigt eine Draufsicht auf Teile einer erfindungsgemäßen Verschlussvorrichtung 10, wobei hier deutlich die Anordnung der Deformationselemente 20 am Trägerelement 12 erkennbar ist. Auch ist zu sehen, dass das Trägerelement 12 zumindest drei Befestigungsmittel 18 zur Befestigung eines Funktionsbauteils 103, insbesondere einer Luftführung 104, umfasst.

In Fig. 12 ist schematisch ein erfindungsgemäßes Verfahren 200 visualisiert. Dabei wird gemäß einem ersten Verfahrensschritt 200.1 eine erfindungsgemäße Verschlussvorrichtung 10 am Fahrzeug angeordnet und gemäß einem zweiten Verfahrensschritt 200.2 die erfindungsgemäße Verschlussvorrichtung 10 am Fahrzeug befestigt, wobei hierbei insbesondere ein Fixiermittel an einem Fixierhilfsmittel 16 der Verschlussvorrichtung 10 zum Einsatz kommt. Dabei kann beispielsweise ein als Führung ausgebildetes Fixierhilfsmittel 16 genutzt werden, um eine Schraube zur Befestigung der Verschlussvorrichtung 10 an einem Montageträger 110 einzuschrauben.

### Bezugszeichenliste

- 10: Verschlussvorrichtung
- 11: Verschlusselement
- 12: Trägerelement

- 15: Aktuator
- 16: Fixierhilfsmittel / Führung
- 16a: Erstes Fixierhilfsmittel
- 16b: Zweites Fixierhilfsmittel
- 17: Aufnahme, Stoßfängerabstützung
- 18: Befestigungsmittel, Clipse
- 19: Lagerelemente
- 20: Deformationselement
- 20a: Erstes Deformationselement
- 20b: Zweites Deformationselement
- 20c: Drittes Deformationselement

- 100: Frontendmodul
- 101: Stoßfänger
- 102: Verkleidungselementes, Stoßfängerüberzug
- 103: Funktionsbauteil
- 104: Luftführung
- 105: Frischluftkanal
- 106: Sensorhalter
- 107: Sensorbaugruppe

- 110: Montageträger

- 200: Verfahren
- 200.1: Erster Verfahrensschritt
- 200.2: Zweiter Verfahrensschritt

## Patentansprüche

1. Verschlussvorrichtung (10) zum Verschließen eines funktionswesentlichen Bauteils eines Fahrzeuges, insbesondere eines Kühlers des Fahrzeuges, mit mindestens einem Verschlusselement (11) zum Regulieren eines Lufteinlasses zum funktionswesentlichen Bauteil, und
einem Trägerelement (12) zur Aufnahme des mindestens einen Verschlusselementes (11), wobei
die Verschlussvorrichtung (10) zumindest ein Deformationselement (20) zur Absorption von Aufprallenergie an dem Fahrzeug aufweist, **dadurch gekennzeichnet, dass** wobei das Deformationselement (20) zur Befestigung der Verschlussvorrichtung (10) an einem Montageträger (110) dient, wobei der Montageträger zur Befestigung von einer Vielzahl von Funktionsbauteilen und/oder funktionswesentlichen Bauteilen des Fahrzeugs ausgeführt ist, wobei das Deformationselement (20) als Energieabsorber zum Fußgängerschutz bei einem Aufprall des Fahrzeuges dient, und mindestens eine Hohlkammer aufweist.

2. Verschlussvorrichtung (10) nach Anspruch 1,
**dadurch gekennzeichnet,**
**dass** das Trägerelement (12), das insbesondere zum Befestigen eines Aktuators (15) ausgelegt ist, um das zumindest eine Verschlusselement (11) anzutreiben, zum Befestigen eines zumindest teilweise außen am Fahrzeug liegenden Verkleidungselementes (102) ausgeführt ist, wobei insbesondere das Verkleidungselement (102) ein Stoßfängerüberzug (102) ist.

3. Verschlussvorrichtung (10) nach Anspruch 1 oder 2,
**dadurch gekennzeichnet,**
**dass** das Trägerelement (12) zum Befestigen zumindest eines Funktionsbauteils (103) des Fahrzeuges ausgeführt ist, insbesondere dass das Funktionsbauteil (103) zumindest einen Sensor, eine Sensorik, eine Kamera, eine Luftführung (104), einen Scheinwerfer, einen Stoßfänger (101) oder dergleichen umfasst.

4. Verschlussvorrichtung (10) nach einem der vorhergehenden Ansprüche,
**dadurch gekennzeichnet,**
**dass** das Deformationselement (20) für eine plastische Verformung ausgeführt ist.

5. Verschlussvorrichtung (10) nach einem der vorhergehenden Ansprüche,
**dadurch gekennzeichnet,**
**dass** zumindest zwei Deformationselemente (20a, 20b) am Trägerelement (12) ausgebildet sind, wobei insbesondere die Deformationselemente (20a, 20b) auf gegenüberliegenden Seiten des Trägerelements (12) angeordnet sind, insbesondere dass ein drittes Deformationselement (20c), insbesondere in Fahrzeugquerrichtung mittig, am Trägerelement (12) vorgesehen ist.

6. Verschlussvorrichtung (10) nach einem der vorhergehenden Ansprüche,
**dadurch gekennzeichnet,**
**dass** das Deformationselement (20) mehr als zwei oder drei Hohlkammern aufweist.

7. Verschlussvorrichtung (10) nach einem der vorhergehenden Ansprüche,
**dadurch gekennzeichnet,**
**dass** das Verschlusselement (11) ein Rolloelement ist oder dass das Verschlusselement (11) eine Lüftungsklappe ist.

8. Verschlussvorrichtung (10) nach einem der vorhergehenden Ansprüche,
**dadurch gekennzeichnet,**
**dass** eine Vielzahl an Verschlusselementen (11) vorgesehen ist, um eine gewünschte Verblendung des funktionswesentlichen Bauteils einzustellen.

9. Verschlussvorrichtung (10) nach einem der vorhergehenden Ansprüche,
**dadurch gekennzeichnet,**
**dass** die Verschlussvorrichtung (10) als Frontmoduladapter (10) ausgebildet ist.

10. Verschlussvorrichtung (10) nach einem der vorhergehenden Ansprüche,
**dadurch gekennzeichnet,**
**dass** das Trägerelement (12) und das Deformationselement (20) ein gemeinsames monolithisches Bauteil bilden, und dass insbesondere das Trägerelement (12) und das Deformationselement (20) materialeinheitlich, bevorzugt als ein Spritzgussteil ausgebildet sind.

11. Verschlussvorrichtung (10) nach einem der vorhergehenden Ansprüche,
**dadurch gekennzeichnet,**
**dass** das Trägerelement (12), insbesondere das Deformationselement (20), ein Fixierhilfsmittel (16) aufweist, um die Verschlussvorrichtung (10) am Fahrzeug zu fixieren, wobei insbesondere das Fixierhilfsmittel (16) in Form einer Führung ausgebildet ist, welche insbesondere mit einem Fixiermittel zusammenwirkt, wobei bevorzugt das Fixiermittel in Form einer Schraube ausgebildet ist.

12. Frontendmodul (100) eines Fahrzeuges, mit
einem Montageträger (110),
**dadurch gekennzeichnet,**
**dass** das Frontendmodul (100) zumindest eine Verschlussvorrichtung (10) mit zumindest einem Deformationselement (20) zur Absorption von Aufprallenergie an dem Fahrzeug aufweist, und dass die Verschlussvorrichtung (10) durch ein Deformationselement (20) an dem Montageträger (110) befestigt ist, wobei die Verschlussvorrichtung (10) nach Anspruch 1 ausgeführt ist.

13. Frontendmodul (100) nach Anspruch 12,
**dadurch gekennzeichnet,**
**dass** der Montageträger (110) zur Befestigung von einer Vielzahl von Funktionsbauteilen und/oder funktionswesentlichen Bauteilen des Fahrzeugs ausgeführt ist.

14. Verfahren (200) zur Montage einer Verschlussvorrichtung (10) nach Anspruch 1, die zum Verschließen eines funktionswesentlichen Bauteils eines Fahrzeuges, insbesondere eines Kühlers ausgelegt ist, und mit
mindestens einem Verschlusselement (11) zum Regulieren eines Lufteinlasses zum funktionswesentlichen Bauteil, und
einem Trägerelement (12) zur Aufnahme des mindestens einen Verschlusselementes (11) ausgeführt ist, und wobei
die Verschlussvorrichtung (10) zumindest ein Deformationselement (20) zur Absorption von Aufprallenergie an dem Fahrzeug aufweist,
umfassend folgende Schritte:
1) Anordnen der Verschlussvorrichtung (10) am Fahrzeug und
2) Befestigen der Verschlussvorrichtung (10) am Fahrzeug durch ein Fixiermittel mit einem Fixierhilfsmittel (16) der Verschlussvorrichtung (10),
wobei
das Deformationselement (20) zur Befestigung der Verschlussvorrichtung (10) an einem Montageträger (110) dient, wobei
das Deformationselement (20) als Energieabsorber zum Fußgängerschutz bei einem Aufprall des Fahrzeuges dient, und mindestens eine Hohlkammer aufweist.

15. Verfahren (200) nach Anspruch14,
**dadurch gekennzeichnet,**
**dass** das Verfahren (200) zur Montage einer Verschlussvorrichtung (10) nach einem der Ansprüche 2 bis 11 und/oder eines Frontendmodules (100) eines Fahrzeuges nach einem der Ansprüche 12 bis 13 dient.

## Claims

1. Closing device (10) for closing a functionally essential component of a vehicle, in particular a radiator of the vehicle, with at least one closing element (11) for regulating an air inlet to the functionally essential component, and
a support element (12) for receiving the at least one closing element (11), wherein
the closing device (10) comprises at least one deformation element (20) for the absorption of impact energy at the vehicle,
**characterized in that**
the deformation element (20) serves to fasten the closing device (10) to a mounting support (110), wherein the mounting support is configured to fasten a plurality of functional components and/or functionally essential components of the vehicle, wherein
the deformation element (20) serves as an energy absorber for pedestrian protection during an impact of the vehicle, and comprises at least one hollow chamber.

2. Closing device (10) according to claim 1,
**characterized in that**
the support element (12), which is in particular configured to fasten an actuator (15), in order to drive the at least one closing element (11), is configured to fasten a trim element (102) at least partly located at the outer side on the vehicle, wherein in particular the trim element (102) is a bumper cover (102).

3. Closing device (10) according to claim 1 or 2,
**characterized in that**
the support element (12) is configured to fasten at least one functional component (103) of the vehicle, in particular that the functional component (103) comprises at least a sensor, a sensor system, a camera, an air guidance (104), a head lamp, a bumper (101), or the like.

4. Closing device (10) according to any one of the preceding claims,
**characterized in that**
the deformation element (20) is configured for a plastic deformation.

5. Closing device (10) according to any one of the preceding claims,
**characterized in that**
at least two deformation elements (20a, 20b) are formed on the support element (12), wherein the deformation elements (20a, 20b) in particular are arranged on opposite sides of the support element (12), in particular that a third deformation element (20c) is provided on the support element (12), in particular centrally in the vehicle transversal direction.

6. Closing device (10) according to any one of the preceding claims,
**characterized in that**
the deformation element (20) comprises more than two or three hollow chambers.

7. Closing device (10) according to any one of the preceding claims,
**characterized in that**
the closing element (11) is a roller blind element, or **in that** the closing element (11) is a ventilation flap.

8. Closing device (10) according to any one of the preceding claims,
**characterized in that**
a plurality of closing elements (11) is provided, in order to set a desired blinding of the functionally essential component.

9. Closing device (10) according to any one of the preceding claims,
**characterized in that**
the closing device (10) is configured as a front module adaptor (10).

10. Closing device (10) according to any one of the preceding claims,
**characterized in that**
the support element (12) and the deformation element (20) form a common monolithic component, and **in that** in particular the support element (12) and the deformation element (20) are configured from the same material, preferably as an injection-molded part.

11. Closing device (10) according to any one of the preceding claims,
**characterized in that**
the support element (12), in particular the deformation element (20), comprises a fixation aid (16), in order to fixate the closing device (10) to the vehicle, wherein in particular the fixation aid (16) is configured in the form of a guidance, which in particular cooperates with a fixation means, wherein the fixation means is preferably configured as a screw.

12. Front end module (100) of a vehicle, comprising:
a mounting support (110),
**characterized in that**
the front end module (100) comprises at least one closing device (10) with at least one deformation element (20) for the absorption of impact energy at the vehicle, and **in that** the closing device (10) is fastened to the mounting support (110) by a deformation element (20), wherein the closing device (10) is configured in accordance with claim 1.

13. Front end module (100) according to claim 12,
**characterized in that**
the mounting support (110) is configured to fasten a plurality of functional components and/or functionally essential components of the vehicle.

14. Method (200) for mounting a closing device (10) according to claim 1, which is configured for closing a functionally essential component of a vehicle, in particular a radiator, and with
at least one closing element (11) for regulating an air inlet to the functionally essential component, and
a support element (12) for receiving the at least one closing element (11), and wherein
the closing device (10) comprises at least one deformation element (20) for the absorption of impact energy at the vehicle, comprising the following steps:
1) arranging the closing device (10) at the vehicle, and
2) fastening the closing device (10) at the vehicle by a fixation means using a fixation aid (16) of the closing device (10), wherein
the deformation element (20) serves to fasten the closing device (10) to a mounting support (110), wherein
the deformation element (20) serves as an energy absorber for pedestrian protection during an impact of the vehicle, and comprises at least one hollow chamber.

15. Method (200) according to claim 14,
**characterized in that**
the method (200) serves for the mounting of a closing device (10) according to any one of the claims 2 to 11 and/or a front end module (100) of a vehicle according to any one of the claims 12 to 13.

## Revendications

1. Dispositif de fermeture (10) servant à fermer un composant essentiel au fonctionnement d'un véhicule, en particulier un radiateur du véhicule, avec au moins un élément de fermeture (11) servant à réguler une entrée d'air vers le composant essentiel au fonctionnement, et
un élément de support (12) servant à recevoir l'au moins un élément de fermeture (11), dans lequel
le dispositif de fermeture (10) présente au moins un élément de déformation (20) servant à l'absorption de l'énergie de collision au véhicule,
**caractérisé en ce que**
l'élément de déformation (20) sert à la fixation du dispositif de fermeture (10) au niveau d'un support de montage (110), dans lequel le support de montage est réalisé pour la fixation d'une pluralité de composants fonctionnels et/ou de composants essentiels au fonctionnement du véhicule, dans lequel l'élément de déformation (20) fait office d'absorbeur d'énergie servant à la protection de piétons dans le cas d'une collision du véhicule et présente au moins une chambre creuse.

2. Dispositif de fermeture (10) selon la revendication 1,
**caractérisé en ce que**
l'élément de support (12), qui est configuré en particulier pour fixer un actionneur (15) afin d'entraîner l'au moins un élément de fermeture (11), est réalisé pour fixer un élément d'habillage (102) situé au moins en partie à l'extérieur du véhicule, dans lequel en particulier l'élément d'habillage (102) est un revêtement de pare-chocs (102).

3. Dispositif de fermeture (10) selon la revendication 1 ou 2,
**caractérisé en ce que**
l'élément de support (12) est réalisé pour fixer au moins un composant fonctionnel (103) du véhicule, en particulier que le composant fonctionnel (103) comprend au moins un capteur, un système de capteur, une caméra, un système de guidage d'air (104), un phare, un pare-chocs (101) ou similaire.

4. Dispositif de fermeture (10) selon l'une quelconque des revendications précédentes,
**caractérisé en ce que**
l'élément de déformation (20) est réalisé pour une déformation plastique.

5. Dispositif de fermeture (10) selon l'une quelconque des revendications précédentes,
**caractérisé en ce qu'**
au moins deux éléments de déformation (20a, 20b) sont réalisés au niveau de l'élément de support (12), dans lequel en particulier les éléments de déformation (20a, 20b) sont disposés sur des côtés se faisant face de l'élément de support (12), en particulier qu'un troisième élément de déformation (20c), est prévu au niveau de l'élément de support (12), en particulier dans la direction transversale du véhicule au centre.

6. Dispositif de fermeture (10) selon l'une quelconque des revendications précédentes,
**caractérisé en ce que**
l'élément de déformation (20) présente plus de deux ou trois chambres creuses.

7. Dispositif de fermeture (10) selon l'une quelconque des revendications précédentes,
**caractérisé en ce que**
l'élément de fermeture (11) est un élément de volet roulant ou que l'élément de fermeture (11) est une trappe de ventilation.

8. Dispositif de fermeture (10) selon l'une quelconque des revendications précédentes,
**caractérisé en ce que**
une pluralité d'éléments de fermeture (11) est prévue pour régler un parement souhaité du composant essentiel au fonctionnement.

9. Dispositif de fermeture (10) selon l'une quelconque des revendications précédentes,
**caractérisé en ce que**
le dispositif de fermeture (10) est réalisé sous la forme d'un adaptateur de module frontal (10).

10. Dispositif de fermeture (10) selon l'une quelconque des revendications précédentes,
**caractérisé en ce que**
l'élément de support (12) et l'élément de déformation (20) forment un composant monolithique commun, et qu'en particulier l'élément de support (12) et l'élément de déformation (20) sont réalisés avec une unité de matériau, de manière préférée sous la forme d'une pièce moulée par injection.

11. Dispositif de fermeture (10) selon l'une quelconque des revendications précédentes,
**caractérisé en ce que**
l'élément de support (12), en particulier l'élément de déformation (20), présente un moyen auxiliaire de fixation (16) pour le bût de fixation du dispositif de fermeture (10) au niveau du véhicule, dans lequel en particulier le moyen auxiliaire de fixation (16) est réalisé sous la forme d'un guidage, lequel coopère en particulier avec un moyen de fixation, dans lequel de manière préférée le moyen de fixation est réalisé sous la forme d'une vis.

12. Module d'extrémité frontal (100) d'un véhicule avec
un support de montage (110),
**caractérisé en ce que**
le module d'extrémité frontal (100) présente au moins un dispositif de fermeture (10) avec au moins un élément de déformation (20) servant à l'absorption d'énergie de collision au niveau du véhicule, et que le dispositif de fermeture (10) est fixé par un élément de déformation (20) au niveau du support de montage (110), dans lequel le dispositif de fermeture (10) est réalisé selon la revendication 1.

13. Module d'extrémité frontal (100) selon la revendication 12,
**caractérisé en ce que**
le support de montage (110) est réalisé pour fixer une pluralité de composants fonctionnels et/ou de composants essentiels au fonctionnement du véhicule.

14. Procédé (200) servant au montage d'un dispositif de fermeture (10) selon la revendication 1, qui est configuré pour fermer un composant essentiel au fonctionnement d'un véhicule, en particulier d'un radiateur, et avec au moins un élément de fermeture (11) servant à réguler une entrée d'air vers le composant essentiel au fonctionnement, et
un élément de support (12) servant à recevoir l'au moins un élément de fermeture (11), et dans lequel
le dispositif de fermeture (10) présente au moins un élément de déformation (20) servant à l'absorption d'énergie de collision au niveau du véhicule, comprenant des étapes suivantes :
1) agencement du dispositif de fermeture (10) au niveau du véhicule, et
2) fixation du dispositif de fermeture (10) au niveau du véhicule par un moyen de fixation avec un moyen auxiliaire de fixation (16) du dispositif de fermeture (10),
dans lequel
l'élément de déformation (20) sert à la fixation du dispositif de fermeture (10) au niveau d'un support de montage (110), dans lequel
l'élément de déformation (20) sert en tant qu'absorbeur d'énergie servant à la protection de piétons dans le cas d'une collision du véhicule et présente au moins une chambre creuse.

15. Procédé (200) selon la revendication 14,
**caractérisé en ce que**
le procédé (200) sert au montage d'un dispositif de fermeture (10) selon l'une quelconque des revendications 2 à 11 et/ou d'un module d'extrémité frontal (100) d'un véhicule selon l'une quelconque des revendications 12 à 13.
